# EUROPÄISCHE PATENTSCHRIFT

(11) **EP 3 330 121 B1**
(45) Veröffentlichungstag und Bekanntmachung des Hinweises auf die Patenterteilung: **19.08.2020**
(21) Anmeldenummer: 17198206.9
(22) Anmeldetag: 25.10.2017
(51) Int. Cl.: B60N 2/68, B61D 33/00, B60N 2/015, B60N 2/30, B60N 2/24

(54) **TRAGSTRUKTUR**
SUPPORT STRUCTURE
STRUCTURE PORTEUSE

(30) Priorität: 02.12.2016 DE 102016123361; 13.10.2017 DE 102017123933
(43) Veröffentlichungstag der Anmeldung: 06.06.2018
(73) Patentinhaber: GRAMMER AG, 92224 Amberg (DE)
(72) Erfinder: Wegmann, Sebastian, 93059 Regensburg (DE); Schneider, Franz, 92318 Neumarkt (DE)
(74) Vertreter: Hannke, Christian

(56) Entgegenhaltungen:
- EP-A1- 1 864 850
- EP-A1- 2 471 684
- WO-A1-2011/009643
- US-A1- 2016 107 544

## Beschreibung

Die Erfindung betrifft eine Tragstruktur zum Tragen eines Fahrzeugsitzes eines Fahrzeugs, insbesondere einen Bahnsitz, und zum Befestigen des mindestens einen Fahrzeugsitzes an einer Wand oder einem Boden einer Kabine des Fahrzeugs, wobei in einer Längsrichtung der Tragstruktur mindestens ein Fahrzeugsitz, bevorzugt zwei Fahrzeugsitze, nebeneinander anordenbar ist / sind.

Aus dem Stand der Technik ist es bisher bei der Anordnung von Fahrzeugsitzen innerhalb einer Kabine bekannt, dass die Fahrzeugsitze in ihrer Position relativ zu der Kabine bzw. der Wand bzw. dem Boden der Kabine ortsfest angeordnet sind. Es waren daher bisher keinerlei Verstellmöglichkeiten des Sitzes zur Erhöhung des Sitzkomforts einer auf dem Fahrzeugsitz sitzenden Person möglich.

Eine derartige Tragstruktur ist beispielsweise DE 10 2015 121 643 zu entnehmen, wobei durch den Aufbau der Tragstruktur eine höhere Steifigkeit zu erreichen und in Leichtbauweise auszuführen ist. Jedoch ist hierbei die obere Schiene gegenüber der darunterliegenden Struktur nicht verlagerbar und somit sind keine Verstellmöglichkeiten des Sitzes gegeben.

EP 2 471 684 A1 zeigt einen Fahrzeugsitz, welcher mittels einer Tragstruktur mit der Wand eines Fahrzeuges verbunden ist, wobei das erste Tragelement gegenüber dem zweiten Tragelement verlagerbar ist.

WO 2011/009643 A1, US 2016/107544 sowie EP 1 864 850 A1 offenbaren einen Fahrzeugsitz, welcher mittels einer Schieneneinrichtung sowie Sitztragelementen mit einer Fahrzeugwand verbunden ist.
Insofern ist es die Aufgabe der Erfindung, eine Tragstruktur bereitzustellen, mittels welcher eine Position eines Fahrzeugsitzes zur Erhöhung von Sitzkomfort mit gleichzeitiger Freiraumbeibehaltung hinter dem Fahrzeugsitz für andere Personen möglich ist. Darüber hinaus wird auch eine schnelle Austauschbarkeit von kaputten oder fehlerhaften Bauteilen gewährleistet.

Ein Kerngedanke der Erfindung liegt darin, eine Tragstruktur zum Tragen mindestens eines Fahrzeugsitzes eines Fahrzeugs, insbesondere einen Bahnsitz, und zum Befestigen des mindestens einen Fahrzeugsitzes an einer Wand oder einem Boden einer Kabine des Fahrzeugs bereitzustellen, wobei in einer Längsrichtung der Tragstruktur mindestens ein Fahrzeugsitz an der Tragstruktur anordenbar ist, wobei die Tragstruktur ein erstes Tragelement, welches an der Wand befestigbar ist, und ein zweites Tragelement, welches mit dem Fahrzeugsitz und mit dem ersten Tragelement verbindbar ist, aufweist, und wobei das zweite Tragelement relativ zu dem ersten Tragelement verlagerbar ist.

Es gibt daher zwei Positionen, welche die Tragstruktur aufweisen kann, nämlich eine verlagerte und einen unverlagerte Position.

Der Fahrzeugsitz umfasst dabei bevorzugt ein Sitzteil und ein Rückenlehnenteil, wobei das Rückenlehnenteil bevorzugt gegenüber dem Sitzteil verschwenkbar ist. Es ist jedoch üblich, dass Bahnsitze ein nicht-verlagerbares Rückenlehnenteil aufweisen.

Dabei ist das zweite Tragelement derart gegenüber dem ersten Tragelement verlagerbar, dass das Sitzteil des Fahrzeugsitzes in seiner Neigung gegenüber dem ersten Tragelement verändert wird. Eine Verlagerung des zweiten Tragelements bedeutet also eine Änderung der Sitzneigung. Durch Änderung der Neigung des Fahrzeugsitzes, insbesondere des Sitzteils, wird auch die Neigung des Rückenlehnenteils angepasst.

Dadurch, dass das erste Tragelement an der Wand der Kabine befestigbar ist, ist das erste Tragelement relativ zu der Wand ortsfest angeordnet. Das zweite Tragelement hingegen ist gegenüber dem ersten Tragelement verlagerbar angeordnet. Ausführungsformen von möglichen Verlagerungen des zweiten Tragelements relativ zu dem ersten Tragelement werden im Nachfolgenden noch genauer beschrieben.

Insbesondere ist das zweite Tragelement in einer Breitenrichtung des zweiten Tragelements nach vorne oder nach hinten verlagerbar. Bevorzugt ist das zweite Tragelement schienenartig ausgestaltet. Die Breitenrichtung des zweiten Tragelements ist hierbei gleichbedeutend mit einer Blickrichtung eines Sitzinsassen. Weiter bevorzugt ist der mindestens eine Fahrzeugsitz so anordenbar, dass die Blickrichtung eines Sitzinsassens bei normaler Sitzhaltung der Breitenrichtung der Tragstruktur entspricht.

Erfindungsgemäß weist das zweite Tragelement eine Oberseite und eine Unterseite auf, wobei die Unterseite des zweiten Tragelements mit einer Oberseite des ersten Tragelements zumindest in Wirkkontakt steht, insbesondere verbunden ist.

Die Form der Unterseite des zweiten Tragelements ist vorzugsweise zumindest teilweise komplementär zu der Form einer Oberseite des ersten Tragelements ausgebildet. Hierdurch kann gewährleistet werden, dass eine Verlagerung des zweiten Tragelements gegenüber dem ersten Tragelement ohne größeren Aufwand durchgeführt werden kann und eine gute Verbindung zwischen der Unterseite des zweiten Tragelements und der Oberseite des ersten Tragelements herstellbar ist, da bei einer Berührung dieser Flächen ein durchgehender flächiger Kontakt ausgebildet ist. Weiter wird durch die zumindest teilweise komplementäre Ausgestaltung des ersten Tragelements und des zweiten Tragelements eine Art Führung des zweiten Tragelements durch das erste Tragelement erreicht, so dass eine Verlagerung des zweiten Tragelements leichter durchgeführt werden kann.

Weiter ist die Verlagerung abhängig von der Form der Unterseite des zweiten Tragelements, wobei die Unterseite des zweiten Tragelements durch die zumindest teilweise komplementäre Ausgestaltung zu der Oberseite des ersten Tragelements abhängig ist. Denkbar ist beispielsweise eine bogenförmige oder zumindest teilweise bogenförmige Ausgestaltung, in Längsrichtung der Tragstruktur gesehen, der Oberseite des ersten Tragelements.

Das zweite Tragelement weist dabei auf seiner Oberseite mindestens eine erste und eine zweite Führungsschiene und auf seiner Unterseite mindestens eine dritte und eine vierte Führungsschiene auf, wobei bevorzugt in die Führungsschienen jeweils mindestens ein Schraubverbindungselement einbringbar ist. Bevorzugt verlaufen die Führungsschienen in der Längsrichtung der Tragstruktur durchgehend, also von einem ersten Ende bis zu einem ersten Ende des zweiten Tragelements.

Vorzugsweise ist ein Fahrzeugsitz mittels der Schraubverbindungselemente der ersten Führungsschiene und zweiten Führungsschiene mit dem zweiten Tragelement verbindbar. Durch diese Schienenanordnung ist es auch denkbar, dass der Fahrzeugsitz entlang der ersten Führungsschiene und der zweiten Führungsschiene in Längsrichtung des zweiten Tragelements, gleichbedeutend mit einer Breitenrichtung des Fahrzeugsitzes, verlagerbar ist, insbesondere verschiebbar ist.

Durch eine Verlagerung des zweiten Tragelements relativ zu dem ersten Tragelement in Richtung der Breitenrichtung des Tragelements, wobei die Breitenrichtung des Tragelements vorzugsweise einer Längsrichtung der Kabine des Fahrzeugs bzw. des Fahrzeugsitzes entspricht, wird die Oberseite des zweiten Tragelements, welche sich bevorzugt in Längsrichtung und Breitenrichtung des zweiten Tragelements, gegenüber der ersten Ebene, welche aus der Längsrichtung und Breitenrichtung des zweiten Tragelements gebildet ist, in seiner Lage relativ verändert, das heißt, die Ebene der Oberseite des zweiten Tragelements schließt einen Winkel mit der ersten Ebene ein.

Erfindungsgemäß sind eine erste Ebene, aufgespannt durch eine Breitenrichtung und eine Längsrichtung des zweiten Tragelements, und eine zweite Ebene, aufgespannt durch die Oberseite des zweiten Tragelements, in einer unverlagerten Position des zweiten Tragelements identisch und schließen in einer verlagerten Position des zweiten Tragelements einen Winkel ein.

Entsprechend wird der mindestens eine Fahrzeugsitz, welcher auf der Oberseite des zweiten Tragelements angeordnet ist, entsprechend der Bewegung des zweiten Tragelements relativ zu dem ersten Tragelement mitbewegt und ausgelenkt, wodurch die Fahrzeugsitzneigung und/oder die Neigung eines Sitzteils des Fahrzeugsitzes veränderbar ist.

Der Fahrzeugsitz weist, wie vorgehend kurz angedeutet, ein Sitzteil und eine Rückenlehne auf, wobei das Sitzteil und die Rückenlehne starr miteinander verbunden sind oder die Rückenlehne relativ zum Sitzteil um eine Schwenkachse verschwenkbar ist. Ist die Rückenlehne um die Schwenkachse verschwenkbar, so können weitere Komforteinstellungen des Fahrzeugsitzes für eine darauf sitzende Person bereitgestellt werden.

Gemäß einer weiteren bevorzugten Ausführungsform erstrecken sich die erste, die zweite, die dritte und die vierte Führungsschiene durchgängig in einer Längsrichtung von einem ersten Endbereich des zweiten Tragelements zu einem zweiten Endbereich des zweiten Tragelements, wobei in die jeweilige Führungsschiene mindestens ein Schraubverbindungselement einbringbar ist, mittels welchem das erste Tragelement mit dem zweiten Tragelement verbindbar ist.

Eine erste Ausgestaltung der Tragstruktur gemäß einer bevorzugten Ausführungsform ist, dass das mindestens eine Schraubverbindungselement in einem Langloch des ersten Tragelements geführt ist. Bevorzugt verläuft das Langloch auf der Oberseite des ersten Tragelements. Durch das Lösen des mindestens einen Schraubverbindungselements ist es möglich, das zweite Tragelement gegenüber dem ersten Tragelement in Breitenrichtung zu verlagern. Ist das zweite Tragelement gegenüber dem ersten Tragelement verlagert worden, kann durch ein Anziehen des mindestens einen Schraubverbindungselements wieder eine sichere Verbindung zwischen dem ersten Tragelement und dem zweiten Tragelement hergestellt werden.

Eine zweite Ausgestaltung der Tragstruktur gemäß einer weiteren bevorzugten Ausführungsform ist, dass das zweite Tragelement eine fünfte Führungsschiene und eine sechste Führungsschiene aufweist, wobei in einer unverlagerten Position mindestens ein erstes Schraubverbindungselement mit dem ersten Tragelement und der dritten Führungsschiene und mindestens ein zweites Schraubverbindungselement mit der vierten Führungsschiene verbunden ist, wobei in einer verlagerten Position das erste Schraubverbindungselement mit dem ersten Tragelement und der fünften Führungsschiene und das zweite Schraubverbindungselement mit dem ersten Tragelement und der sechsten Führungsschiene verbunden ist.

Besonders bevorzugt sind die fünfte und sechste Führungsschiene auf der Unterseite des zweiten Tragelements angeordnet.

Eine dritte Ausgestaltung der Tragstruktur gemäß einer weiteren bevorzugten Ausführungsform ist, dass das zweite Tragelement eine fünfte Führungsschiene, welche an einem ersten Seitenbereich des zweiten Tragelements angeordnet ist, und eine sechste Führungsschiene, welche an einem zweiten Seitenbereich des zweiten Tragelements angeordnet ist, aufweist, wobei in einer unverlagerten Position die fünfte Führungsschiene und die vierte Führungsschiene mit dem ersten Tragelement mittels Schraubverbindungselementen verbunden ist, wobei in einer verlagerten Position die dritte Führungsschiene und die sechste Führungsschiene mit dem ersten Tragelement mittels den Schraubverbindungselementen verbunden ist.

Weitere Ziele, Merkmale und Anwendungsmöglichkeiten der vorliegenden Erfindung ergeben sich aus der beiliegenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1A: eine Tragstruktur gemäß einer bevorzugten Ausführungsform mit einem mit der Tragstruktur verbundenen Fahrzeugsitz in einer unverlagerten Position;
- Fig. 1B: die Tragstruktur gemäß Fig. 1A in einer verlagerten Position;
- Fig. 1C: einen Vergleich zwischen den Tragstrukturen der Figuren 1A und 1B;
- Fig. 2A: ein erstes Tragelement gemäß einer Ausführungsform;
- Fig. 2B: ein zweites Tragelement gemäß einer Ausführungsform;
- Fig. 3A: die Tragstruktur gemäß einer weiteren bevorzugten Ausführungsform in einer unverlagerten Position, in einem Querschnitt;
- Fig. 3B: die Tragstruktur gemäß Fig. 3A in einer verlagerten Position;
- Fig. 4A: die Tragstruktur gemäß einer weiteren bevorzugten Ausführungsform in einer unverlagerten Position, in einem Querschnitt;
- Fig. 4B: die Tragstruktur gemäß Fig. 4A in einer verlagerten Position;
- Fig. 5A: die Tragstruktur gemäß einer weiteren bevorzugten Ausführungsform in einer unverlagerten Position, in einem Querschnitt;
- Fig. 5B: die Tragstruktur gemäß Fig. 5A in einer verlagerten Position;
- Fig. 6A-6D: verschiedene Ausgestaltungen einer Unterseite des zweiten Tragelements und einer Oberseite des ersten Tragelements.

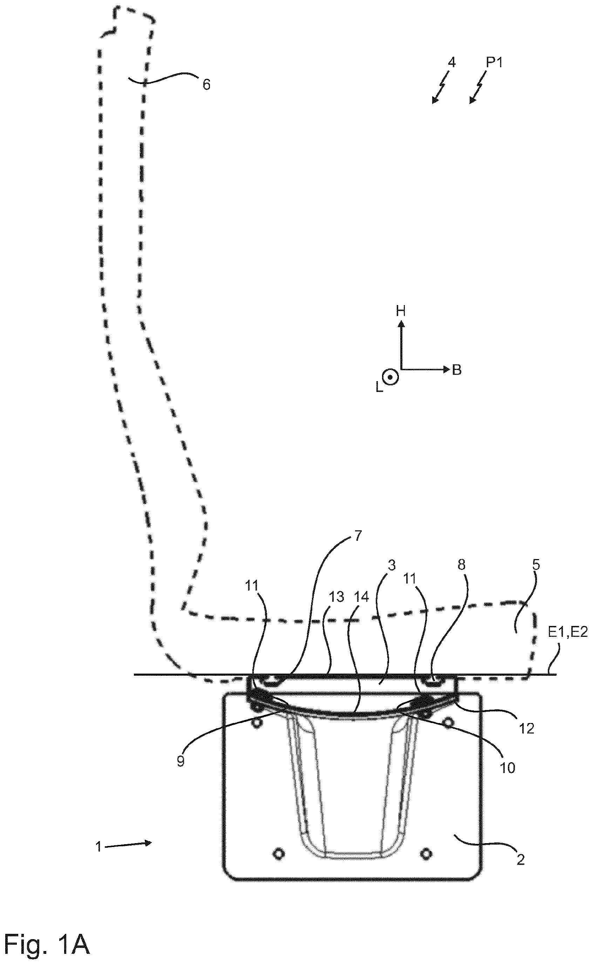

In der Figur 1A ist eine Tragstruktur 1 gezeigt, welche ein erstes Tragelement 2 und ein zweites Tragelement 3 aufweist, wobei das erste Tragelement mit einer Wand einer Kabine eines Fahrzeugs (hier nicht gezeigt) verbunden ist und gegenüber der Wand ortsfest angeordnet ist. Das zweite Tragelement 3 ist mittels Schraubverbindungselementen 11 mit dem ersten Tragelement 2 verbunden. Wie weiter zu erkennen ist, ist der Fahrzeugsitz 4 ebenfalls mittels Schraubverbindungselementen 11 (hier nicht gezeigt) mit dem zweiten Tragelement 3 fest verbunden. Das zweite Tragelement 3 weist weiter eine erste Führungsschiene 7, eine zweite Führungsschiene 8, eine dritte Führungsschiene 9 und eine vierte Führungsschiene 10 auf, in welche die Schraubverbindungselemente eingebracht sind, wobei die erste 7 und zweite Führungsschiene 8 auf einer Oberseite 13 des zweiten Tragelements und die dritte 9 und vierte Führungsschiene 10 auf einer Unterseite 14 des zweiten Tragelements angeordnet sind.

Es ist hierbei denkbar, dass das Rückenlehnenteil 6 gegenüber dem Sitzteil 5 mittels einer Schwenkachse (hier nicht gezeigt) schwenkbar gelagert ist. Es ist jedoch üblich, dass Sitze in Bahnen, Bussen und dergleichen kein schwenkbares Rückenlehnenteil 6 aufweisen.

Weiter ist zu erkennen, dass die Oberseite 13 des zweiten Tragelements 3 eine zweite Ebene E2 aufspannt, welche in der unverlagerten Position P1 mit der ersten Ebene E1 übereinstimmt, welche durch die Breitenrichtung B und der Längsrichtung L des zweiten Tragelements 3 aufgespannt wird. In einer verlagerten Position P1, das heißt, dass das zweite Tragelement 3 gegenüber dem ersten Tragelement 2 verlagert ist, stimmen die Ebenen E1, E2 nicht mehr überein, vielmehr schließen die erste Ebene E1 und die zweite Ebene E2 einen Winkel 15 gegeneinander ein. Die unverlagerte Position P1 entspricht der Situation, in welcher die erste Ebene E1 und die zweite Ebene E2 übereinstimmen, die verlagerte Position P2 entspricht der Situation, in welcher die erste Ebene E1 und die zweite Ebene E2 einen Winkel 15, welcher größer Null ist, einschließen.

Eine Verlagerung des zweiten Tragelements 3 und entsprechend der Verbindung des Fahrzeugsitzes 4 mit dem zweiten Tragelement 3 eine Verlagerung des Fahrzeugsitzes 4 ist wie folgt herstellbar. Zunächst werden diejenigen Schraubverbindungen 11, welche die Oberseite 12 des ersten Tragelements 2 und die Unterseite 12 des zweiten Tragelements 3 miteinander verbinden, gelöst, so dass das zweite Tragelement 3 gegenüber dem ersten Tragelement verlagerbar ist und verlagert wird. Besonders bevorzugt wird dabei das zweite Tragelement 3 in Breitenrichtung B verlagert und entsprechend das zweite Tragelement 3 mit seiner Unterseite 14 gegenüber der Oberseite 12 des ersten Tragelements 2 verlagert. Besonders bevorzugt sind die Oberseite 12 des ersten Tragelements 2 und die Unterseite 14 des zweiten Tragelements 3 zumindest teilweise komplementär zueinander ausgebildet, so dass durch die entsprechend vorgegebene Form der Oberseite 12 bzw. der Unterseite 14 eine leichte Verlagerung möglich ist. Nach Verlagerung des zweiten Tragelements 3 relativ zu dem ersten Tragelement 2 schließen nun die erste Ebene E1 und die zweite Ebene E2 einen Winkel 15 ein, abhängig davon, wie weit das zweite Tragelement 3 gegenüber dem ersten Tragelement 2 verlagert worden ist. In den Figuren 1A-1C ist die Oberseite 12 des ersten Tragelements 2 bogenförmig ausgebildet, in Richtung der Längsrichtung L gesehen. Entsprechend ist die Unterseite 14 des zweiten Tragelements 3 zumindest teilweise komplementär zu der Oberseite 12 des ersten Tragelements 2 ausgebildet, insbesondere ist die Unterseite 14 vollständig komplementär ausgebildet.

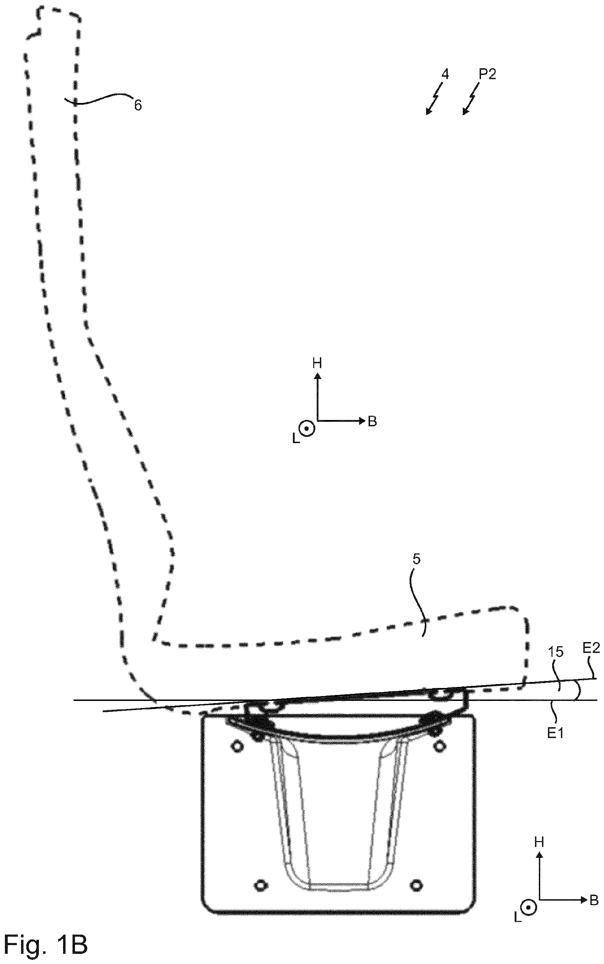

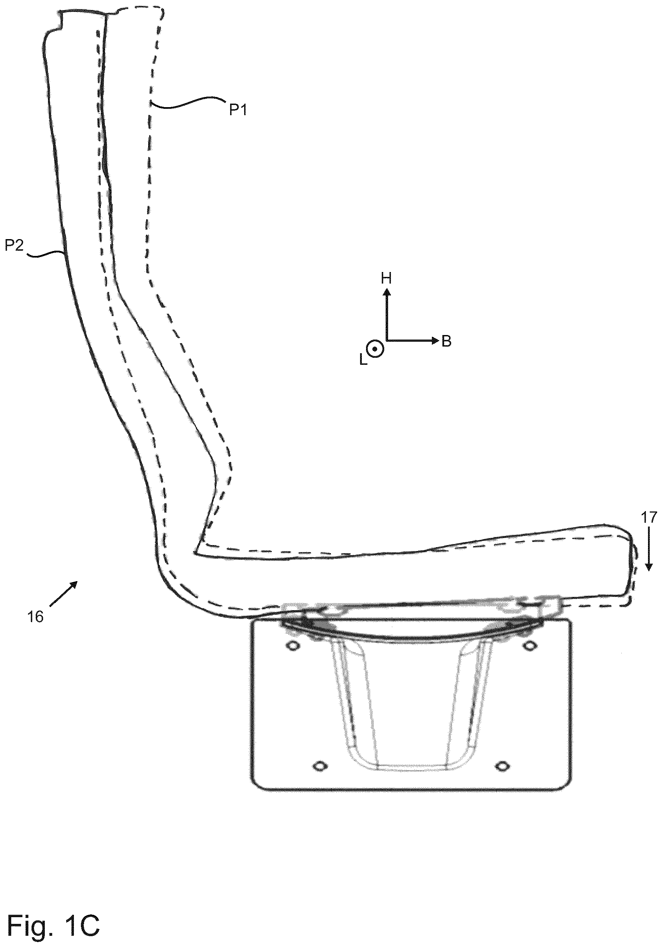

Ein Vergleich der unverlagerten Position P1 und der verlagerten Position P2 ist besonders gut einem Vergleich der Figuren 1A und 1B zu entnehmen, wobei der Vergleich vorliegend auch in der Figur 1C gezeigt ist. Die gestrichelten Linien in der Figur 1C zeigen dabei den Fahrzeugsitz 4 bzw. das zweite Tragelement 3 in der unverlagerten Position P1 und die durchgezogenen Linien zeigen den Fahrzeugsitz 4 bzw. das zweite Tragelement 3 in einer verlagerten Position P2. Wie deutlich zu erkennen ist, wird ein Freiraum 16 hinter dem Fahrzeugsitz 4, also in Breitenrichtung B (entspricht der Längsrichtung der Kabine) hinter dem Fahrzeugsitz 4, nur geringfügig verändert, so dass eine Person, welche hinter dem Fahrzeugsitz 4 auf einem weiteren Fahrzeugsitz 4 sitzt, in seinem Freiraum 16 nicht oder nur unwesentlich eingeschränkt wird.

Wie weiter zu erkennen ist, ändert sich auch ein Freiraum 17 vor dem Fahrzeugsitz 4 also in Breitenrichtung B vor dem Fahrzeugsitz 4, ebenso nicht oder nur geringfügig, wodurch die auf dem Fahrzeugsitz 4 sitzende Person ebenfalls nicht in ihrem Komfort eingeschränkt wird.

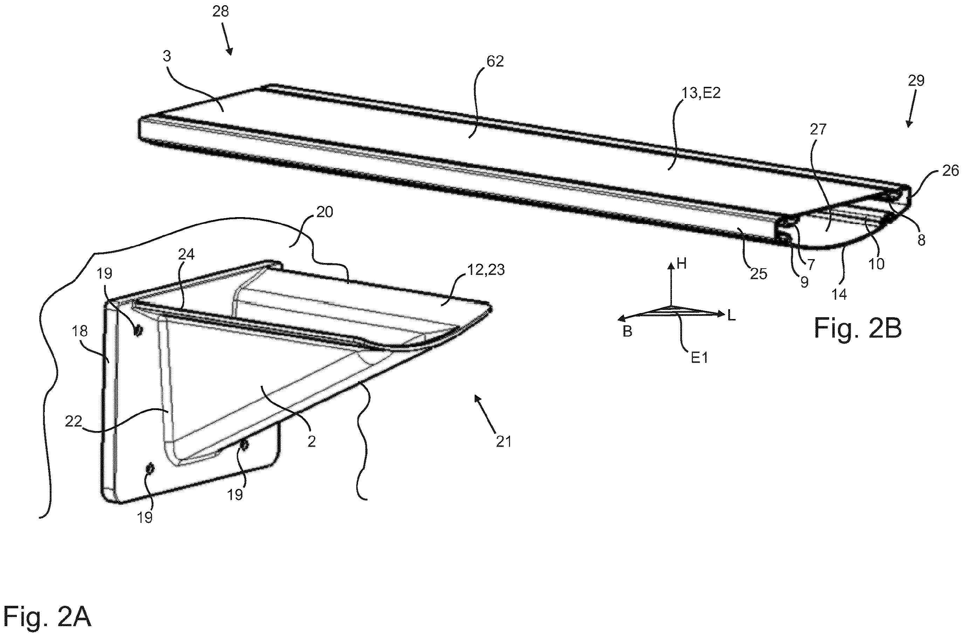

Die Figur 2A zeigt das erste Tragelement 2 gemäß einer Ausführungsform in einer perspektivischen Ansicht und die Figur 2B das zweite Tragelement 3 gemäß einer Ausführungsform in einer perspektivischen Ansicht in jeweils ersten Ausgestaltungen. Weitere Ausgestaltungen, insbesondere der jeweiligen Oberseiten und Unterseiten des ersten 2 und zweiten Tragelements 3, sind den nachfolgenden Figuren zu entnehmen.

Wie in der Figur 2A zu erkennen ist, weist das erste Tragelement 2 eine Halterplatte 18 auf, wobei die Halterplatte Bohrungen 19 aufweist, mittels welchen die Halterplatte 18 mit der Wand 20 durch Schrauben oder dergleichen (hier nicht gezeigt) verbunden ist bzw. verbindbar ist. An der Halterplatte 18 ist ein erster Abschnitt 22 angeordnet, welcher einen Übergangsbereich 22 darstellt und welcher sich sowohl in Höhenrichtung H, in Breitenrichtung B und in Längsrichtung L erstreckt. Die Halterplatte 18 und der erste Abschnitt 22 sind hierbei mittels des Übergangsbereichs 22 miteinander verbunden.

Darüber hinaus ist das erste Tragelement 2 derart ausgestaltet, dass in Längsrichtung L gesehen die Ausdehnung in Höhenrichtung H abnimmt, wobei die Verringerung der Ausdehnung in Höhenrichtung H eine Funktion F der Längsrichtung L ist, wobei einzelne Punkte der Längsrichtung L durch X gekennzeichnet sind. Die Funktion F ist daher eine Funktion F(X). Die Funktion F(X) kann, wie vorliegend, eine Gerade beschreiben, oder auch eine beliebige Bogenkurve.

Weiter weist das erste Tragelement 2 eine Oberseite 12 auf, welche in der vorliegenden Figur 2A durch einen ersten Flächenabschnitt 23 und einen zweiten Flächenabschnitt 24 ausgebildet ist. Die Ausgestaltung der Oberseite 12 des ersten Tragelements 2 kann dabei nahezu beliebig sein. Insbesondere kann die Oberseite 12 als eine einzige Fläche ausgebildet sein, welche unterschiedliche dreidimensionale Formen einnehmen kann.

Zusätzlich weist die Oberseite 12 des ersten Tragelements 2 zusätzlich Bohrungen, Ausnehmungen, Schlitze oder dergleichen (hier nicht gezeigt) auf, mittels welchen eine Verbindung mittels mindestens einem Schraubverbindungselement (hier nicht gezeigt) mit dem zweiten Tragelement 3 hergestellt werden kann.

Wie bereits obig erwähnt, beschreibt die Figur 2B ein zweites Tragelement 3, welches eine Oberseite 13 und eine Unterseite 14 aufweist, wobei die Unterseite 14 des zweiten Tragelements 3 mit der Oberseite 12 des ersten Tragelements 2 zumindest in Wirkkontakt steht. Bevorzugt ist die Unterseite 14 zumindest teilweise komplementär zu der Oberseite 12 des ersten Tragelements 2 ausgebildet.

Wie zu erkennen ist, weist das zweite Tragelement 3, welches vorliegend schienenartig ausgebildet ist, eine erste Führungsschiene 7 und eine zweite Führungsschiene 8 auf, welche auf der Oberseite 13 des zweiten Tragelements 3 angeordnet sind, und eine dritte Führungsschiene 9 und eine vierte Führungsschiene 10, welche auf der Unterseite 14 des zweiten Tragelements 3 angeordnet sind.

Die Oberseite 13 des zweiten Tragelements 3 ist hierbei zumindest teilweise flächig ausgebildet, weist also zumindest einen flächigen Anteil 62 auf, welcher die zweite Ebene E2 bildet. Die Unterseite 14 des zweiten Tragelements 3 hingegen kann in ihrer Form beliebig ausgestaltet sein, jedoch zumindest teilweise oder vollständig komplementär zu der Oberseite 12 des ersten Tragelements 2. Eine erste Ebene E1 wird durch die Breitenrichtung B und die Längsrichtung L aufgespannt.

Die Oberseite 13 und die Unterseite 14 sind vorliegend einerseits durch einen ersten Seitenbereich 25 und andererseits durch einen zweiten Seitenbereich 26 miteinander verbunden. Vorzugsweise erstrecken sich die Seitenbereiche 25, 26 in Längsrichtung L und in Höhenrichtung H, eine Erstreckung in Breitenrichtung B ist ebenso vorgesehen, kann aber gegenüber der Erstreckung in Höhenrichtung H und Längsrichtung L vernachlässigt werden. Durch die Verbindung der Oberseite 13 und der Unterseite 14 des zweiten Tragelements 3 durch die Seitenbereiche 25, 26 ist das zweite Tragelement 3 schienenartig ausgebildet und es ist ein Hohlraum 27 ausgebildet. Dieser Hohlraum 28 ist notwendig, damit die jeweiligen Führungsschienen 7, 8, 9, 10 anordenbar sind, da die Führungsschienen 7, 8, 9, 10 in dem Hohlraum 28 angeordnet sind, das heißt insbesondere, jeweils in Höhenrichtung H gesehen, dass die erste Führungsschiene 7 und die zweite Führungsschiene 8 unterhalb der Oberseite 13 des zweiten Tragelements 3 und die dritte Führungsschiene 9 und die vierte Führungsschiene oberhalb der Unterseite 14 des zweiten Tragelements 3 angeordnet sind.

Die erste 7, zweite 8, dritte 9 und vierte Führungsschiene 10 erstrecken sich vorzugsweise durchgängig in Längsrichtung L von einem ersten Endbereich 28 des zweiten Tragelements 3 zu einem zweiten Endbereich 29 des zweiten Tragelements 3. In die jeweiligen Führungsschienen 7, 8, 9, 10 sind Schraubverbindungselemente 11 (hier nicht gezeigt) einbringbar, mittels welchen eine Verbindung zwischen dem ersten Tragelement 2 und dem zweiten Tragelement 3 herstellbar ist.

In den nachfolgenden Figuren werden verschiedene Ausführungsformen zur Verlagerung des zweiten Tragelements 3 gegenüber dem ersten Tragelement 2 dargestellt und erläutert.

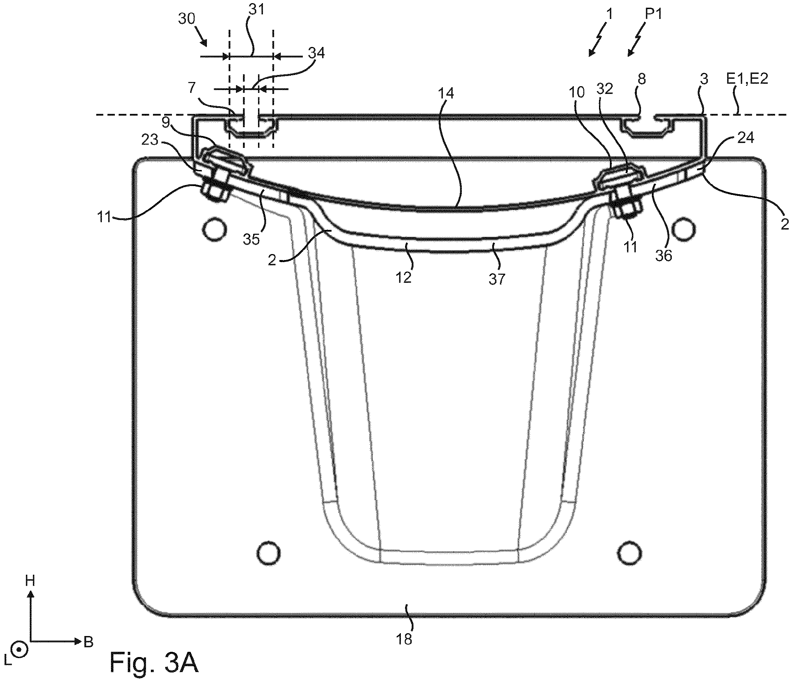

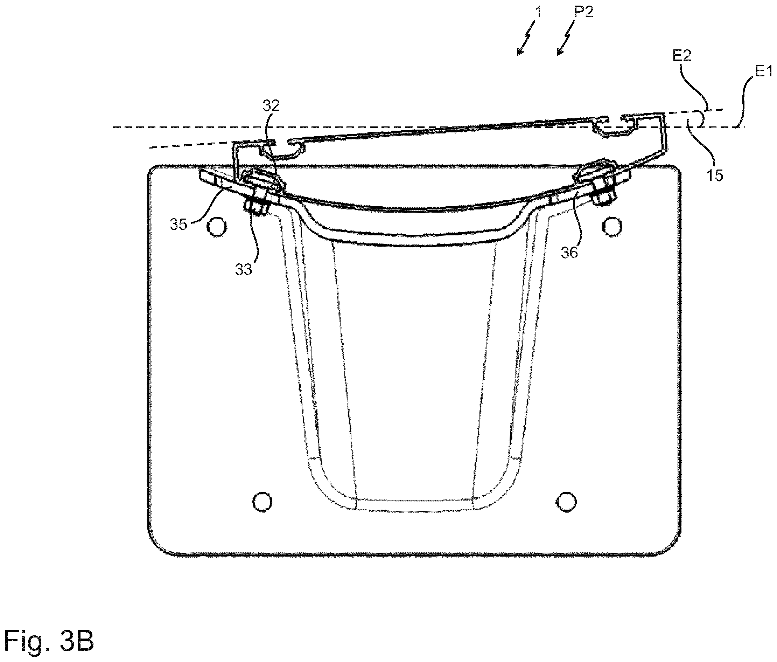

Die Figur 3A zeigt eine erste Ausführungsform der Tragstruktur 1 in einer unverlagerten Position P1, die Figur 3B die erste Ausführungsform der Tragstruktur in einer verlagerten Position P2. Die Figuren 3A und 3B entsprechen einer Vorderansicht der Tragstruktur 1.

Wie hierbei zu erkennen ist, sind die Führungsschienen 7, 8, 9, 10 im Wesentlichen C-förmig ausgebildet, wodurch Teile einer Schraubverbindung 11 durch die Form der Führungsschienen 7, 8, 9, 10 gehalten werden, falls die Erstreckung des Teils des Schraubverbindungselements 11 größer ist als eine Öffnung 30 einer Führungsschiene 7, 8, 9, 10 mit Erstreckung 31 in Breitenrichtung B. Die Öffnung 30 des C, welche gleich der Öffnung 30 einer Führungsschiene 7, 8, 9, 10 ist, ist in Höhenrichtung H entweder nach oben oder nach unten ausgerichtet, wobei die erste Führungsschiene 7 und die zweite Führungsschiene 8 die Öffnung 30 nach oben aufweisen, und die dritte Führungsschiene 9 und die vierte Führungsschiene 10 nach unten.

Das Schraubverbindungselement 11 weist vorzugsweise einen Schraubenkopf 32 auf, dessen Ausdehnung im Wesentlichen der maximalen Ausdehnung 34 der Führungsschiene 7, 8, 9, 10 entspricht. Der Schraubenkopf 32 ist hierbei jeweils mit der ersten Führungsschiene 7 und der zweiten Führungsschiene 8 des zweiten Tragelements 3 verbunden. Mutter 33, die zum Sichern und Anziehen des Schraubverbindungselements 11 vorgesehen sind, sind daher frei zugänglich. Durch die Schraubverbindungselemente 11, welche in den Führungsschienen 7, 8, 9, 10 angeordnet sind, kann einerseits eine Verbindung mit dem ersten Tragelement 2 und andererseits mit einem Fahrzeugsitz 4 hergestellt werden.

Es ist durch die Führungsschienen 7, 8, 9, 10 auch möglich, den mindestens einen Fahrzeugsitz 4 in Längsrichtung L des zweiten Tragelements 3 zu verlagern.

Die erste Ebene E1 entspricht gemäß der Figur 3A der zweiten Ebene E2; die Figur 3A zeigt die Tragstruktur 1 in einer unverlagerten Position P1.

Die Schraubverbindungselemente 11 sind gemäß den Figuren 3A und 3B jeweils in einem Langloch 35, 36 geführt. Wird das Schraubverbindungselement 11 zwischen dem ersten Tragelement 2 und dem zweiten Tragelement 3 gelöst, so können die Schraubverbindungselemente 11 jeweils durch das Langloch 35, 36 geführt verlagert werden. Da hierbei die Schraubverbindungselemente 11 im Wesentlichen ortsfest gegenüber dem zweiten Tragelement 3 angeordnet sind, wird durch eine Verlagerung der Schraubverbindungen 11 entsprechend das zweite Tragelement 3 verlagert. Nach Verlagerung des zweiten Tragelements 3 relativ zu dem ersten Tragelement 2 werden die Schraubverbindungen 11 wieder angezogen bzw. hergestellt, so dass das zweite Tragelement 3 wieder fest mit dem ersten Tragelement 2 verbunden ist und sich das zweite Tragelement 3 bzw. die Tragstruktur in der verlagerten Position P1 befindet, wie aus der Figur 3B zu erkennen ist.

Weiter ist den Figuren 3A und 3B zu entnehmen, dass die Unterseite 14 des zweiten Tragelements 3 und die Oberseite 12 des ersten Tragelements 2 zumindest teilweise komplementär zueinander ausgebildet sind, insbesondere der erste 23 und zweite Flächenabschnitt 24 der Oberseite 12 des ersten Tragelements 2. Ein dritter Flächenabschnitt 37 der Oberseite 12 des ersten Tragelements 2 steht dabei nicht in Wirkkontakt mit der Unterseite 14 des zweiten Tragelements 3, wodurch die Reibung zwischen der Oberseite 12 und der Unterseite 14 beim Verlagern des zweiten Tragelements 3 verringert werden kann. Es wäre daher denkbar, den Flächenabschnitt der Unterseite 14, welcher nicht in Wirkkontakt mit der Oberseite 12 des ersten Tragelements 2 steht und nicht mit den Flächenabschnitten 23, 24 beim Verlagern in Wirkkontakt bringbar ist, beliebig auszugestalten, beispielsweise geradlinig in Breitenrichtung B gesehen.

Die Unterseite 14 des zweiten Tragelements 3 ist hierbei bogenförmig ausgebildet, insbesondere als ein Teil eines Kreises, wobei der (fiktive) Mittelpunkt des Kreises oberhalb der Oberseite 13 des zweiten Tragelements 3 angeordnet ist.

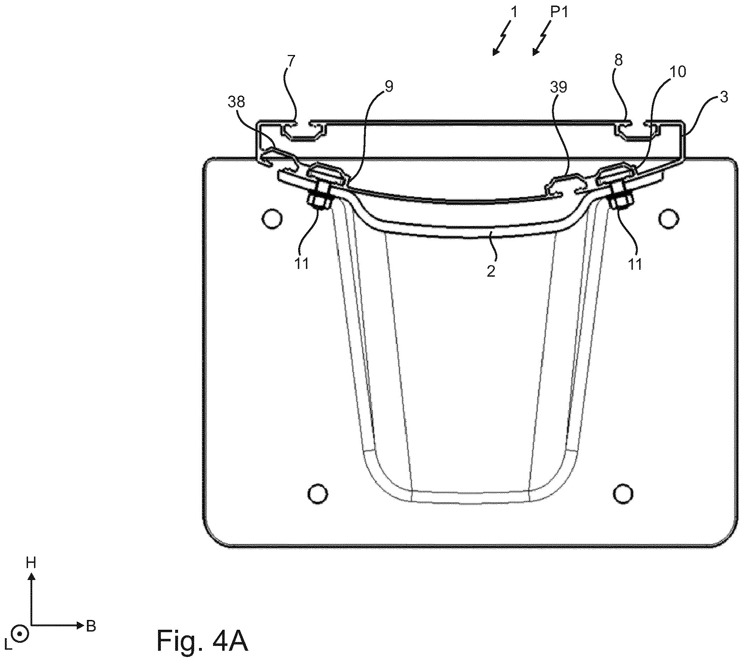

Die zweite Ausführungsform, gezeigt in den Figuren 4A (unverlagerte Position P1) und 4B (verlagerte Position P1), unterscheidet sich zu der ersten Ausführungsform der Figuren 3A und 3B in den folgenden Punkten.

Das erste Tragelement 2 weist keine Langlöcher auf, das Schraubverbindungselement 11 ist daher gegenüber dem ersten Tragelement 2 auf andere Art verlagerbar.

Das zweite Tragelement 3 weist zusätzlich eine fünfte Führungsschiene 38 und eine sechste Führungsschiene 39 auf, wobei die fünfte Führungsschiene 38 und sechste Führungsschiene 39 den gleichen Abstand zueinander aufweisen wie die dritte Führungsschiene 9 und vierte Führungsschiene 10. Insbesondere sind die fünfte Führungsschiene 38 und die sechste Führungsschiene 39 an der Unterseite 14 des zweiten Tragelements 3 angeordnet.

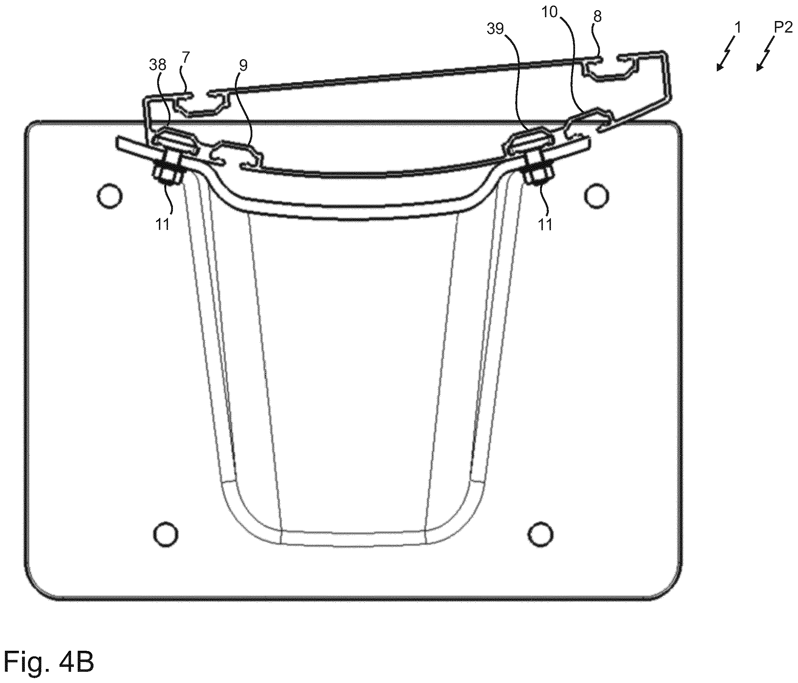

In der unverlagerten Position P1 sind die Schraubverbindungen 11 mit der dritten Führungsschiene 9 und vierten Führungsschiene 10 verbunden. Soll das zweite Tragelement 3 gegenüber dem ersten Tragelement 2 verlagert werden, so muss zunächst wieder das Schraubverbindungselement 11 gelöst werden und das zweite Tragelement 3 auch von den Schraubverbindungselementen 11 gelöst werden und anschließend die Schraubverbindungselemente 11 mit der fünften Führungsschiene 38 und der sechsten Führungsschiene 39 verbunden werden. Da die fünfte Führungsschiene 38 und die sechste Führungsschiene 39 den gleichen Abstand zueinander aufweisen wie die dritte Führungsschiene 9 und vierte Führungsschiene 10, wird durch Verbinden der fünften Führungsschiene 38 und sechsten Führungsschiene 39 des zweiten Tragelements 3 mit den Schraubverbindungen 11 das zweite Tragelement 3 gegenüber dem ersten Tragelement 2 verlagert, wie aus der Figur 4B zu erkennen ist.

Die Unterseite 14 des zweiten Tragelements 3 ist in den Figuren 3A, 3B, 4A und 4B bogenförmig ausgebildet. Entsprechend komplementär zu dieser bogenförmigen Ausgestaltung der Unterseite 14 sind der erste Flächenabschnitt 23 und zweite Flächenabschnitt 24 ausgebildet.

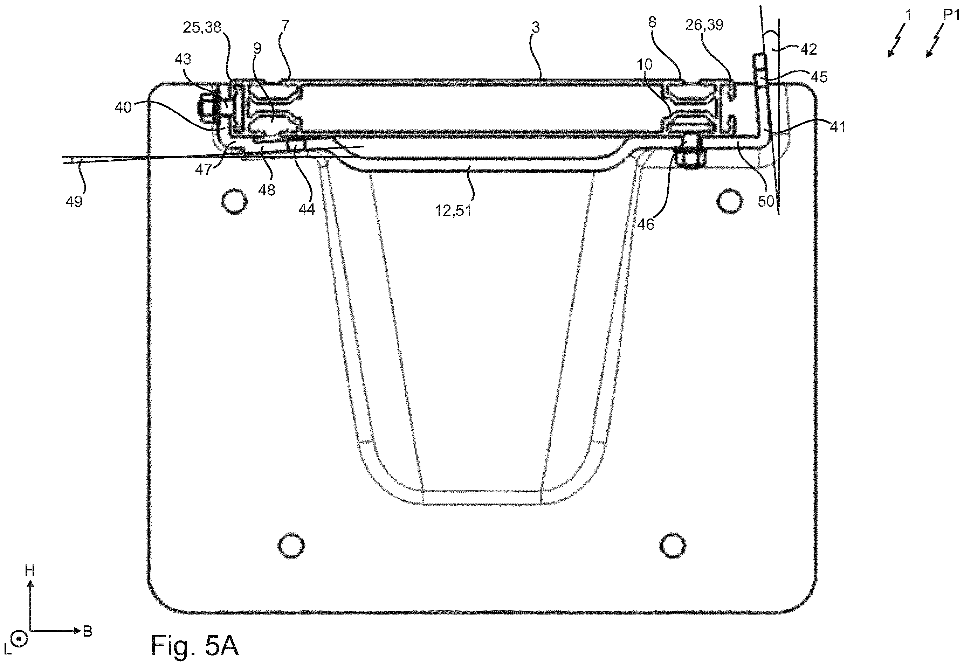

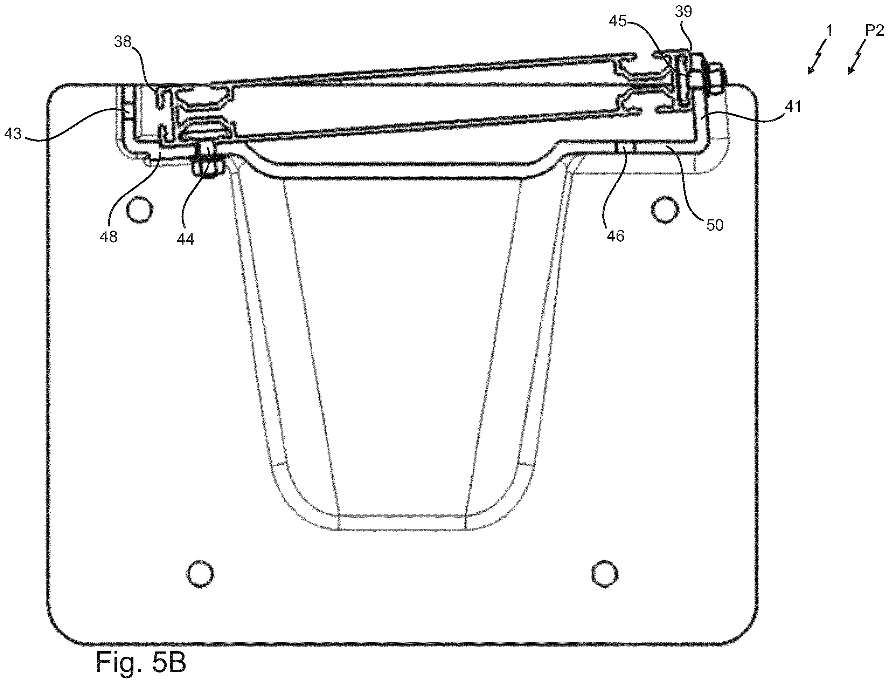

Die Figuren 5A (unverlagerte Position P1 der Tragstruktur 1) und 5B (verlagerte Position P2 der Tragstruktur 1) zeigen eine dritte Ausführungsform einer Tragstruktur 1.

Das zweite Tragelement 3 weist eine fünfte Führungsschiene 38 und eine sechste Führungsschiene 39 auf, wobei die fünfte Führungsschiene 38 an dem ersten Seitenbereich 25 und die sechste Führungsschiene 39 an dem zweiten Seitenbereich 26 des zweiten Tragelements 3 angeordnet sind.

Die Oberseite 12 des ersten Tragelements 2 weist insgesamt ein Lochbildmuster auf, welches im Folgenden genauer beschrieben wird. Darüber hinaus weist die Oberseite 12 des ersten Tragelements einen sich in Höhenrichtung H erstreckenden ersten Seitenabschnitt 40 und einen sich in einem Winkel 42 zu der Höhenrichtung H erstreckenden zweiten Seitenabschnitt 41 auf.

An den ersten Abschnitt 40 schließt sich ein erster Übergangsabschnitt 47 an, welcher sich in Breitenrichtung B erstreckt. An diesen Übergangsabschnitt 47 schließt sich ein zweiter Übergangsabschnitt 48 an, welcher sich in einem Winkel 49 zu der Breitenrichtung B erstreckt. An den zweiten Seitenabschnitt 41 schließt sich ein dritter Übergangsabschnitt 50 an, welcher sich in Breitenrichtung B erstreckt. Zwischen dem zweiten Übergangsabschnitt 48 und dem dritten Übergangsabschnitt 50 ist ein Zwischenabschnitt 51 angeordnet.

In der Figur 5A, welche die Tragstruktur 1 in einer unverlagerten Stellung P1 zeigt, ist das zweite Tragelement 3 mit dem ersten Tragelement 2 wie folgt verbunden. Eine Schraubverbindung 11 ist einerseits mit der fünften Führungsschiene 38 und andererseits mit einer ersten Bohrung 43 des ersten Seitenabschnittes 40 verbunden. Weiter ist eine Schraubverbindung 11 zwischen einer vierten Bohrung des dritten Übergangsabschnitts 50 und der vierten Führungsschiene 10 angeordnet. Die Unterseite 14 des zweiten Tragelements 3 ist demnach in Wirkkontakt mit dem ersten Seitenabschnitt 40 und dem dritten Übergangsabschnitt 50 und liegt darüber hinaus auf dem ersten Übergangsabschnitt 47 und dem dritten Übergangsabschnitt 50 auf.

Soll das zweite Tragelement 3 gegenüber dem ersten Tragelement 2 verlagert werden, so müssen zunächst die Schraubverbindungen 11 gelöst werden. In der verlagerten Position P2 ist das zweite Tragelement 3 gegenüber dem ersten Tragelement 2 wie folgt angeordnet.

Die Schraubverbindung 11, welche in der unverlagerten Position P1 mit dem ersten Seitenabschnitt 40 und der fünften Führungsschiene 38 verbunden war, ist nun in der verlagerten Position P2 mit der dritten Führungsschiene 9 und mit dem zweiten Übergangsabschnitt 48 mittels einer zweiten Bohrung 44 verbunden. Entsprechend liegt das zweite Tragelement 3 auf dem zweiten Übergangsabschnitt 48 auf, so dass die Oberseite 13 des zweiten Tragelements 3 den Winkel 49 gegenüber der ersten Ebene E1 einschließt. Insbesondere entspricht der Wert des Winkels 42 dem Wert des Winkels 49. Die Schraubverbindung 11, welche in der unverlagerten Position P1 mit dem dritten Übergangsabschnitt 50 und der vierten Führungsschiene 10 verbunden ist, ist in der verlagerten Position P2 mit einer dritten Bohrung 45 des zweiten Seitenabschnitts 41 und der sechsten Führungsschiene 39 verbunden.

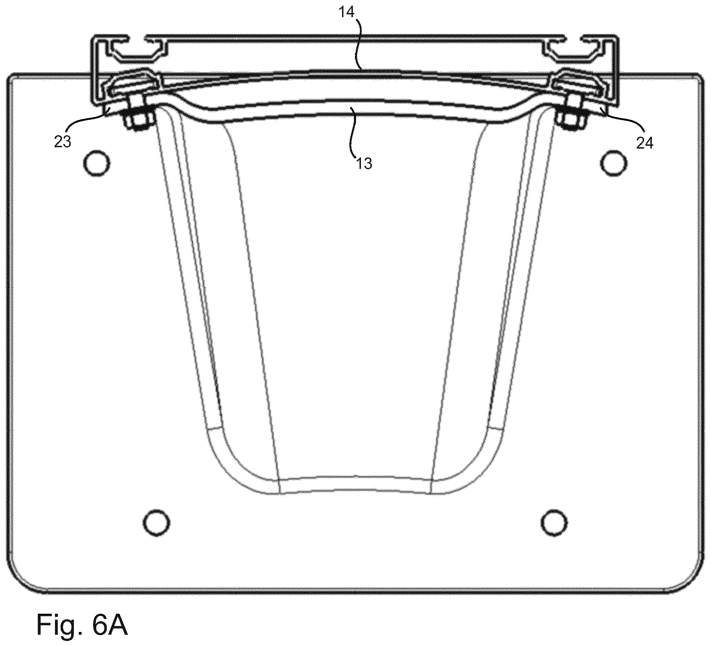

Die Figuren 6A bis 6D zeigen weitere Ausgestaltungen der Unterseite 14 des zweiten Tragelements 3 und der zumindest teilweise komplementär dazu ausgebildeten Oberseite 12 des ersten Tragelements 2.

Die Unterseite 14 des zweiten Tragelements 3 ist in der Figur 6A bogenförmig ausgebildet, insbesondere ist die Bogenform ein Teil eines Kreises, wobei der fiktive Mittelpunkt dieses Kreises unterhalb der Oberseite 13 des zweiten Tragelements 3 angeordnet ist. Entsprechend ist die Oberseite 12 des ersten Tragelements 2 ausgebildet, insbesondere der erste Flächenabschnitt 23 und der zweite Flächenabschnitt 24 sind komplementär zu der Bogenform der Unterseite 14 des zweiten Tragelements 3 ausgebildet.

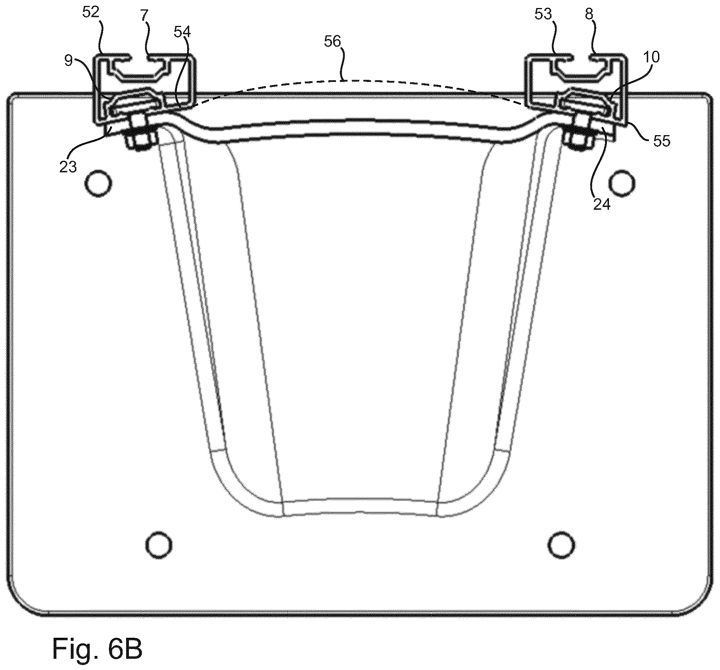

Die Figur 6B zeigt eine ähnliche Ausgestaltung wie die Figur 6A, jedoch sind anstelle eines durchgängig ausgebildeten zweiten Tragelements 3 ein erstes Tragelementteil 52 und ein zweites Tragelementteil 53 vorgesehen, wobei das erste Tragelementteil 52 die erste Führungsschiene 7 und dritte Führungsschiene 9 aufweist und das zweite Tragelementteil 53 die zweite Führungsschiene 8 und die vierte Führungsschiene 10 aufweist. Die Unterseite 54 des ersten Tragelementteils 52 ist mit dem ersten Flächenabschnitt 23 verbunden und die Unterseite 55 des zweiten Tragelementteils 53 ist mit dem zweiten Flächenabschnitt 24 verbunden. Die gestrichelte Linie 56 entspricht dabei fiktiv gesehen der Unterseite 14 des zweiten Tragelements 3.

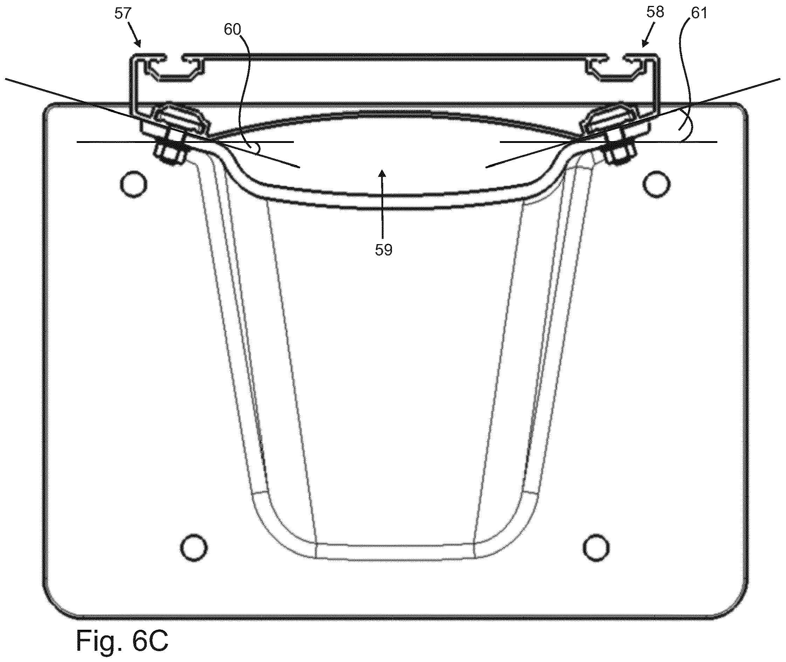

Die Figur 6C zeigt eine weitere Ausgestaltung der Oberseite 12 des ersten Tragelements 2 und der Unterseite 14 des zweiten Tragelements 3.

Wie zu erkennen ist, weist die Unterseite 14 des zweiten Tragelements 3 verschiedene Bereiche 57, 58, 59 auf, wobei der dritte Bereich 59 zwischen dem ersten Bereich 57 und dem zweiten Bereich 58 angeordnet ist. Wie zu erkennen ist, schließt der erste Bereich 57 einen Winkel 60 mit der Breitenrichtung ein und der zweite Bereich 58 einen Winkel 61 mit der Breitenrichtung, wobei der Betrag des Winkels 60 dem Betrag des Winkels 61 entspricht, sich jedoch im Vorzeichen unterscheidet. Der dritte Bereich 59 ist hingegen bogenförmig ausgebildet, vorzugsweise als ein Teil eines Kreises mit einem fiktiven Mittelpunkt, welcher unterhalb der Oberseite 13 des zweiten Tragelements 3 angeordnet ist.

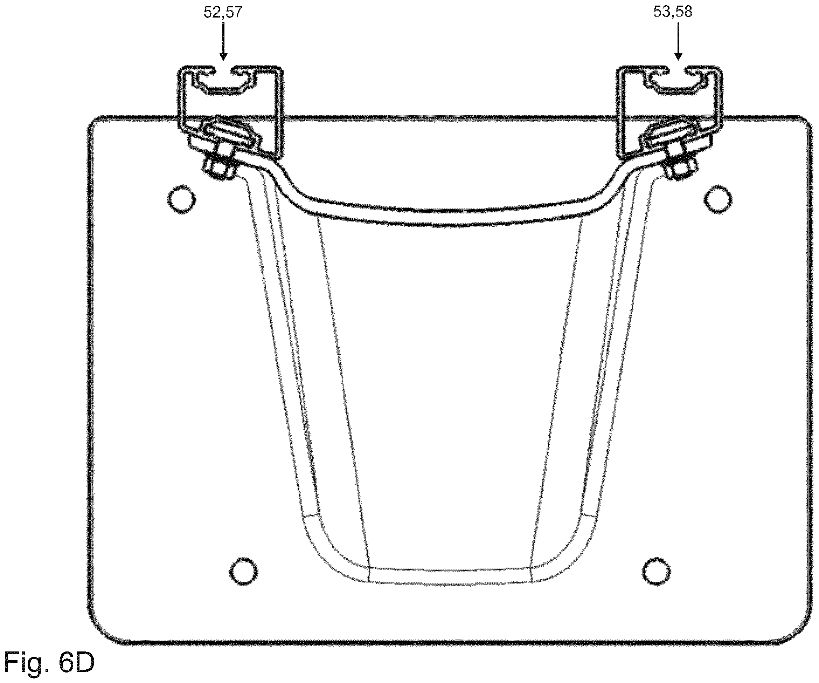

Die Figur 6D zeigt eine weitere Ausgestaltung der Unterseite 14 und der Oberseite 12. Wie in der Figur 6B, sind auch hier ein erstes Tragelementteil 52 und ein zweites Tragelementteil 53 vorgesehen, welche voneinander beabstandet sind und keine Verbindung zueinander aufweisen. Das erste Tragelementteil 52 weist den ersten Bereich 57 und das zweite Tragelementteil 53 den zweiten Bereich 58 auf, wie in der Figur 6C bereits beschrieben. Ein dritter Bereich 59 ist nicht vorgesehen.

### Bezugszeichenliste

- 1: Tragstruktur
- 2: erstes Tragelement
- 3: zweites Tragelement
- 4: Fahrzeugsitz
- 5: Sitzteil
- 6: Rückenlehne
- 7: erste Führungsschiene
- 8: zweite Führungsschiene
- 9: dritte Führungsschiene
- 10: vierte Führungsschiene
- 11: Schraubverbindungselement
- 12: Oberseite erstes Tragelement
- 13: Oberseite zweites Tragelement
- 14: Unterseite zweites Tragelement
- 15: Winkel
- 16: Freiraum
- 17: Freiraum
- 18: Halterplatte
- 19: Bohrung
- 20: Wand
- 21: erster Abschnitt
- 22: Übergangsbereich
- 23: erster Flächenabschnitt
- 24: zweiter Flächenabschnitt
- 25: erster Seitenbereich
- 26: zweiter Seitenbereich
- 27: Hohlraum
- 28: erster Endbereich
- 29: zweiter Endbereich
- 30: Öffnung
- 31: Erstreckung
- 32: Schraubenkopf
- 33: Mutter
- 34: maximale Ausdehnung
- 35: Langloch
- 36: Langloch
- 37: dritter Flächenabschnitt
- 38: fünfte Führungsschiene
- 39: sechste Führungsschiene
- 40: erster Seitenabschnitt
- 41: zweiter Seitenabschnitt
- 42: Winkel
- 43: erste Bohrung
- 44: zweite Bohrung
- 45: dritte Bohrung
- 46: vierte Bohrung
- 47: erster Übergangsabschnitt
- 48: zweiter Übergangsabschnitt
- 49: Winkel
- 50: dritter Übergangsabschnitt
- 51: Zwischenabschnitt
- 52: erstes Tragelementteil
- 53: zweites Tragelementteil
- 54: Unterseite
- 55: Unterseite
- 56: fiktive Unterseite
- 57: erster Bereich
- 58: zweiter Bereich
- 59: dritter Bereich
- 60: Winkel
- 61: Winkel
- 62: flächiger Anteil
- P1: unverlagerte Position
- P2: verlagerte Position
- E1: erste Ebene
- E2: zweite Ebene
- B: Breitenrichtung
- L: Längsrichtung
- H: Höhenrichtung

## Patentansprüche

1. Tragstruktur (1) zum Tragen mindestens eines Fahrzeugsitzes (4) eines Fahrzeugs, insbesondere einen Bahnsitz, und zum Befestigen des mindestens einen Fahrzeugsitzes (4) an einer Wand oder einem Boden einer Kabine des Fahrzeugs, wobei in einer Längsrichtung (L) der Tragstruktur (1) mindestens ein Fahrzeugsitz (4) an der Tragstruktur (1) anordenbar ist, wobei die Tragstruktur (1) ein erstes Tragelement (2), welches an der Wand befestigbar ist, und ein zweites Tragelement (3), welches mit dem Fahrzeugsitz (4) und mit dem ersten Tragelement (2) verbindbar ist, aufweist, wobei
das zweite Tragelement (3) relativ zu dem ersten Tragelement (2) verlagerbar ist,
**dadurch gekennzeichnet, dass**
das zweite Tragelement (3) eine Oberseite (13) und eine Unterseite (14) aufweist, wobei die Unterseite (14) des zweiten Tragelements (3) mit einer Oberseite (12) des ersten Tragelements (2) zumindest in Wirkkontakt steht und eine erste Ebene (E1), aufgespannt durch eine Breitenrichtung (B) und eine Längsrichtung (L) des zweiten Tragelements (3), und eine zweite Ebene (E2), aufgespannt durch die Oberseite (13) des zweiten Tragelements (3), in einer unverlagerten Position (P1) des zweiten Tragelements (3) identisch sind und in einer verlagerten Position (P2) des zweiten Tragelements (3) einen Winkel (15) einschließen.

2. Tragstruktur (1) nach Anspruch 1,
**dadurch gekennzeichnet, dass**
das zweite Tragelement (3) in einer Breitenrichtung (B) des zweiten Tragelements (2) nach vorne oder hinten verlagerbar ist.

3. Tragstruktur (1) nach Anspruch 1 oder 2,
**dadurch gekennzeichnet, dass**
das zweite Tragelement (3) auf der Oberseite (13) mindestens eine erste (7) und eine zweite Führungsschiene (8) und auf der Unterseite (14) mindestens eine dritte (9) und vierte Führungsschiene (10) aufweist.

4. Tragstruktur (1) nach einem der Ansprüche 1-3,
**dadurch gekennzeichnet, dass**
eine Form der Unterseite (14) des zweiten Tragelements (3) zumindest teilweise komplementär zu einer Form der Oberseite (12) des ersten Tragelements (2) ausgebildet ist.

5. Tragstruktur (1) nach Anspruch 3,
**dadurch gekennzeichnet, dass**
sich die erste, zweite, dritte und vierte Führungsschiene (7, 8, 9, 10) durchgängig in einer Längsrichtung (L) von einem ersten Endbereich (28) des zweiten Tragelements (3) zu einem zweiten Endbereich (29) des zweiten Tragelements (3) erstrecken, wobei in die jeweilige Führungsschiene (7, 8, 9, 10) mindestens ein Schraubverbindungselement (11) einbringbar ist, mittels welchem das erste Tragelement (2) mit dem zweiten Tragelement (3) verbindbar ist.

6. Tragstruktur (1) nach Anspruch 5,
**dadurch gekennzeichnet, dass**
das mindestens eine Schraubverbindungselement (11) in einem Langloch (35, 36) geführt ist.

7. Tragstruktur (1) nach Anspruch 5,
**dadurch gekennzeichnet, dass**
das zweite Tragelement (3) weiter eine fünfte Führungsschiene (38) und eine sechste Führungsschiene (39) aufweist, wobei in einer unverlagerten Position (P1) mindestens ein erstes Schraubverbindungselement (11) mit dem ersten Tragelement (2) und der dritten Führungsschiene (9) und mindestens ein zweites Schraubverbindungselement (11) mit der vierten Führungsschiene (10) verbunden ist, wobei in einer verlagerten Position (P2) das erste Schraubverbindungselement (11) mit dem ersten Tragelement (2) und der fünften Führungsschiene (38) und das zweite Schraubverbindungselement (11) mit dem ersten Tragelement (2) und der sechsten Führungsschiene (39) verbunden ist.

8. Tragstruktur (1) nach Anspruch 5,
**dadurch gekennzeichnet, dass**
das zweite Tragelement (3) eine fünfte Führungsschiene (38), welche an einem ersten Seitenbereich (25) des zweiten Tragelements (3) angeordnet ist, und eine sechste Führungsschiene (39), welche an einem zweiten Seitenbereich (39) des zweiten Tragelements (3) angeordnet ist, aufweist, wobei in einer unverlagerten Position (P1) die fünfte Führungsschiene (38) und die vierte Führungsschiene (10) mit dem ersten Tragelement (2) mittels Schraubverbindungselementen (11) verbunden ist, wobei in einer verlagerten Position (P2) die dritte Führungsschiene (9) und die sechste Führungsschiene (39) mit dem ersten Tragelement (2) mittels den Schraubverbindungselementen (11) verbunden ist.

## Claims

1. Support structure (1) for supporting at least one vehicle seat (4) of a vehicle, in particular a train seat, and for attaching the at least one vehicle seat (4) to a wall or a floor of a cabin of the vehicle, it being possible to arrange at least one vehicle seat (4) on the support structure (1) in a longitudinal direction (L) of the support structure (1), the support structure (1) having a first support element (2) which can be fastened to the wall and a second support element (3) which can be connected to the vehicle seat (4) and to the first support element (2), the second support element (3) being movable relative to the first support element (2), **characterised in that** the second support element (3) has an upper face (13) and a lower face (14), the lower face (14) of the second support element (3) being at least in operative contact with an upper face (12) of the first support element (2), and a first plane (E1) established by a width direction (B) and a longitudinal direction (L) of the second support element (3), and a second plane (E2) established by the upper face (13) of the second support element (3) being identical in an unmoved position (P1) of the second support element (3), and enclosing an angle (15) in a moved position (P2) of the second support element (3).

2. Support structure (1) according to claim 1, **characterised in that** the second support element (3) is movable forwards or backwards in a width direction (B) of the second support element (2).

3. Support structure (1) according to either claim 1 or claim 2, **characterised in that** the second support element (3) comprises at least a first (7) and a second guide rail (8) on the upper face (13), and at least a third (9) and fourth guide rail (10) on the lower face (14).

4. Support structure (1) according to any of claims 1-3, **characterised in that** a shape of the lower face (14) of the second support element (3) is at least partially complementary to a shape of the upper face (12) of the first support element (2).

5. Support structure (1) according to claim 3, **characterised in that** the first, second, third and fourth guide rail (7, 8, 9, 10) extend continuously in a longitudinal direction (L) from a first end region (28) of the second support element (3) to a second end region (29) of the second support element (3), at least one screw connection element (11) being insertable into the relevant guide rail (7, 8, 9, 10), by means of which the first support element (2) can be connected to the second support element (3).

6. Support structure (1) according to claim 5, **characterised in that** the at least one screw connection element (11) is guided in an elongate hole (35, 36).

7. Support structure (1) according to claim 5, **characterised in that** the second support element (3) further comprises a fifth guide rail (38) and a sixth guide rail (39), at least one first screw connection element (11) being connected to the first support element (2) and the third guide rail (9) in an unmoved position (P1), and at least one second screw connection element (11) being connected to the fourth guide rail (10) in an unmoved position, the first screw connection element (11) being connected to the first support element (2) in a moved position (P2), and the fifth guide rail (38) and the second screw connection element (11) being connected to the first support element (2) and the sixth guide rail (39) in a moved position.

8. Support structure (1) according to claim 5, **characterised in that** the second support element (3) comprises a fifth guide rail (38) which is arranged on a first lateral region (25) of the second support element (3), and a sixth guide rail (39) which is arranged on a second lateral region (39) of the second support element (3), the fifth guide rail (38) and the fourth guide rail (10) being connected to the first support element (2) by means of screw connection elements (11) in an unmoved position (P1), and the third guide rail (9) and the sixth guide rail (39) being connected to the first support element (2) by means of the screw connection elements (11) in a moved position (P2).

## Revendications

1. Structure porteuse (1) pour le support d'au moins un siège de véhicule (4) d'un véhicule, en particulier d'un siège de train, et pour la fixation dudit au moins un siège de véhicule (4) sur une paroi ou un plancher d'une cabine du véhicule, où, dans une direction longitudinale (L) de la structure porteuse (1), au moins un siège de véhicule (4) est apte à être disposé sur la structure porteuse (1), la structure porteuse (1) présentant un premier élément porteur (2), lequel est apte à être fixé sur la paroi, et un second élément porteur (3), lequel est apte à être relié avec le siège de véhicule (4) et avec le premier élément porteur (2),
le second élément porteur (3) étant déplaçable par rapport au premier élément porteur (2),
**caractérisé par le fait que**
le second élément porteur (3) présente une face supérieure (13) et une face inférieure (14), la face inférieure (14) du second élément porteur (3) étant au moins en contact fonctionnel avec une face supérieure (12) du premier élément porteur (2), et un premier plan (E1), passant par une direction de la largeur (B) et une direction longitudinale (L) du second élément porteur (3), et un second plan (E2), passant par la surface supérieure (13) du second élément porteur (3), étant identiques dans une position non déplacée (P1) du second élément porteur (3) et formant un angle (15) dans une position déplacée (P2) du second élément porteur (3).

2. Structure porteuse (1) selon la revendication 1,
**caractérisé par le fait que**
le second élément porteur (3) est déplaçable vers l'avant ou vers l'arrière dans une direction de la largeur (B) du second élément porteur (3).

3. Structure porteuse (1) selon l'une des revendications 1 ou 2,
**caractérisé par le fait que**
le second élément porteur (3) présente, sur la face supérieure (13), au moins un premier (7) et un deuxième rail de guidage (8) et, sur la face inférieure (14), au moins un troisième (9) et un quatrième rail de guidage (10).

4. Structure porteuse (1) selon l'une des revendications 1 à 3,
**caractérisé par le fait qu'**
une forme de la face inférieure (14) du second élément porteur (3) est conçue au moins en partie de façon complémentaire à une forme de la face supérieure (12) du premier élément porteur (2).

5. Structure porteuse (1) selon la revendication 3, **caractérisé par le fait que**
les premier, deuxième, troisième et quatrième rails de guidage (7, 8, 9, 10) s'étendent de façon continue dans une direction longitudinale (L) d'une première région d'extrémité (28) du second élément porteur (3) à une seconde région d'extrémité (29) du second élément porteur (3), où, dans les rails de guidage respectifs (7, 8, 9, 10), au moins un élément de liaison par vissage (11) est apte à être introduit, au moyen duquel le premier élément porteur (2) est apte à être relié avec le second élément porteur (3).

6. Structure porteuse (1) selon la revendication 5,
**caractérisé par le fait que**
ledit au moins un élément de liaison par vissage (11) est guidé dans un trou allongé (35, 36).

7. Structure porteuse (1) selon la revendication 5,
**caractérisé par le fait que**
le second élément porteur (3) présente en outre un cinquième rail de guidage (38) et un sixième rail de guidage (39), où, dans une position non déplacée (P1) au moins un premier élément de liaison par vissage (11) est relié avec le premier élément porteur (2) et le troisième rail de guidage (9) et au moins un deuxième élément de liaison par vissage (11) est relié avec le quatrième rail de guidage (10), où, dans une position déplacée (P2), le premier élément de liaison par vissage (11) est relié avec le premier élément porteur (2) et le cinquième rail de guidage (38) et le deuxième élément de liaison par vissage (11) est relié avec le premier élément porteur (2) et le sixième rail de guidage (39).

8. Structure porteuse (1) selon la revendication 5,
**caractérisé par le fait que**
le second élément porteur (3) présente un cinquième rail de guidage (38), lequel est disposé sur une première région latérale (25) du second élément porteur (3), et un sixième rail de guidage (39), lequel est disposé sur une seconde région latérale (39) du second élément porteur (3), où, dans une position non déplacée (P1), le cinquième rail de guidage (38) et le quatrième rail de guidage (10) sont reliés avec le premier élément porteur (2) au moyen d'éléments de liaison par vissage (11), où, dans une position déplacée (P2), le troisième rail de guidage (9) et le sixième rail de guidage (39) sont reliés avec le premier élément porteur (2) au moyen des éléments de liaison par vissage (11).
